# EUROPÄISCHE PATENTSCHRIFT

(11) **EP 0 329 064 B1**
(45) Veröffentlichungstag und Bekanntmachung des Hinweises auf die Patenterteilung: **07.04.1993**
(21) Anmeldenummer: 89102482.0
(22) Anmeldetag: 14.02.1989
(51) Int. Cl.: A47J 45/07

(54) **Gefäss mit einem mit diesem verbindbaren Griffkörper**
Vessel and handle connectible to it
Récipient et poignée lui étant connectable

(30) Priorität: 19.02.1988 DE 3805229
(43) Veröffentlichungstag der Anmeldung: 23.08.1989
(73) Patentinhaber: Heinrich Baumgarten KG Spezialfabrik für Beschlagteile, D-57277 Neunkirchen (DE)
(72) Erfinder: Fischbach, Wolfgang, D-5244 Daaden (DE)
(74) Vertreter: Missling, Arne, Dipl.-Ing.

(56) Entgegenhaltungen:
- DE-A- 2 314 431
- DE-B- 2 264 244
- DE-U- 7 246 055
- DE-U- 8 517 666
- GB-A- 2 074 012

## Beschreibung

Die Erfindung betrifft ein Gefäß mit einem mit diesem verbindbaren Griffkörper, mit einem an einer Außenfläche des Gefäßes befestigten, einen Vieleckquerschnitt aufweisenden Tragteil, mit einer in dem Griffkörper an dessen Stirnseite befindlichen, in ihrem Querschnitt zu dem Querschnitt des Tragteiles passenden Ausnehmung und mit einem im Bereich der Ausnehmung angeordneten, mit dem Tragteil und dem Griffkörper in Eingriff bringbaren Federelement, wobei der Griffkörper formschlüssig mit dem Tragteil verriegelbar ist in der Weise, daß das Federelement einen Vorsprung aufweist, der mit einer Haltenut des Griffkörpers in Eingriff bringbar ist.

Bei einem bekannten Gefäß der eingangs beschriebenen Art erfolgt eine verdrehsichere Halterung des Griffkörpers an dem Gefäß dadurch, daß das an dem Gefäß befestigte Tragteil in seiner Ausgestaltung und Dimensionierung genau der Ausnehmung des Griffkorpers angepaßt ist. Der Griffkörper wird somit auf das Tragteil aufgesteckt, wobei mittels des Federelementes ein Lösen des Griffkörpers verhindert wird. Um den Griffkörper so an dem Tragteil und damit an dem Gefäß zu befestigen, daß keine Relativbewegung zwischen dem Griffkörper und dem Tragteil möglich ist, ist es erforderlich, die Ausnehmung des Griffkörpers paßgenau zu den Außenabmessungen des Tragteiles auszugestalten. Dies erweist sich insbesondere dann, wenn ein kostengünstiges Gefäß hergestellt werden soll, als nachteilig, da sowohl der Griffkörper als auch das Tragteil mit hoher Präzision gefertigt werden müssen.

Ein weiterer Nachteil der bekannten Ausbildung liegt darin, daß das Tragteil unmittelbar nach dem Tiefziehen oder Fließdrücken des Gefäßes, das beispielsweise in Form eines Kochtopfes oder einer Pfanne ausgebildet sein kann, an dem Gefäß befestigt werden muß, beispielsweise mittels einer Schweißverbindung. Üblicherweise wird ein derartiges Gefäß anschließend oberflächenbehandelt, beispielsweise emailliert oder, zumindest an seiner Außenseite, mit einer Farbschicht beschichtet. Diese Vorgänge führen dazu, daß auch die Abmessungen des Tragteiles verändert werden, da die Farbschicht oder die Emailleschicht sich auch an dem Tragteil anlagern. In diesem Fall ist es nicht oder nur nach einer Nachbearbeitung des Tragteiles möglich, den Griffkörper auf dieses aufzuschieben. Bei einer Beschichtung der Gefäß-Innenwandungen, beispielsweise mit Teflon, ist es erforderlich, die Außenfläche des Gefäßes anschließend einer Reinigungsbehandlung zu unterziehen, beispielsweise einem chemischen Ätzverfahren. Durch diesen Reinigungsvorgang wird die Oberfläche des Tragteiles stark aufgerauht, wodurch sich zum einen der Griffkörper nur schwer aufschieben läßt und wodurch zum anderen ein nicht erwünschtes Spiel zwischen dem Tragteil und der Ausnehmung des Griffkörpers auftreten kann. Im erstgenannten Fall kann das Aufschieben des Griffkörpers dadurch erleichtert werden, daß ein Gleitmittel, beispielsweise Fett, aufgebracht wird. Dies erfordert jedoch einen zusätzlichen Arbeitsgang, welcher, bedingt durch die ansteigenden Kosten, vielfach unerwünscht ist.

Aus dem DE-Gebrauchsmuster 85 17 666 ist es bereits bekannt, das Federelement nicht nur zum Feststellen des Griffkörpers, sondern auch zu dessen spielfreiem Sitz auf dem Tragteil zu verwenden. Dabei können zwei um 90° versetzt angeordnete Drahtfedern verwendet werden, die auf zwei benachbarte Seiten des in der Ausnehmung des Griffkörpers befindlichen Tragteiles einwirken und in beiden Richtungen ein fertigungs- und auch funktionsbedingtes Spiel so ausgleichen, daß der Griffkörper unverrückbar auf dem Tragteil sitzt. Die Drahtfedern sind mit einem Vorsprung versehen, indem beispielsweise ihr Ende abgewinkelt ist, der in eine Ausnehmung des Griffkörpers einfällt und das System formschlüssig verriegelt.

Für eine Massenfertigung, wie sie z.B. bei der Herstellung von Kochtöpfen oder dergleichen erforderlich ist, ist eine solche Anordnung nachteilig. Die Drahtfedern sind nur mit viel Geschick in dem Griffkörper vormontierbar und fallen auch leicht wieder heraus, da sie in die Ausnehmung leichtgängig eingeführt werden müssen. Außerdem lassen sich Drahtfedern nur bedingt als Präzisionsbauelemente herstellen, was aber hier durchaus erforderlich ist. Ersetzt man die Drahtfedern aber durch flache Federbleche, dann ist deren Herstellung mit entsprechenden Schnittwerkzeugen zwar erheblich einfacher und auch mit großer Genauigkeit möglich; aber auch sie sind in der Vormontage leicht verlierbar und erfordern dabei einen erheblichen Arbeitsaufwand.

Der Erfindung liegt die Aufgabe zugrunde, ein Gefäß mit einem mit diesem verbindbaren Griffkörper der eingangs genannten Art zu schaffen, bei welchem eine Relativbewegung zwischen dem Griffkörper und dem Gefäß auf sichere Weise vermieden wird, welches aber auch bei einfachem Aufbau und leichter Handhabbarkeit ein einfaches Anbringen des Griffkörpers ermöglicht.

Erfindungsgemäß wird die Aufgabe dadurch gelöst, daß das Federelement zwei im wesentlichen ebene, plattenförmige, einstückig miteinander verbundene Teilbereiche aufweist, welche in einem Winkel zueinander angeordnet sind und welche an zwei Seitenflächen des Tragteiles und den zugeordneten Flächen der Ausnehmung anliegen, daß ein Teil eines Teilbereiches des Federelementes, der auch den Vorsprung für eine formschlüssige Verriegelung des Griffkörpers aufweist, zu dem Tragteil hin abgewinkelt ist, daß das Tragteil mit einer Ausnehmung zur Einführung des abgewinkelten Teiles versehen ist und daß ein freier Endbereich des Teilbereiches mit einer Innenfläche der Ausnehmung in Anlage bringbar ist.

Das erfindungsgemäße Gefäß zeichnet sich durch eine Reihe erheblicher Vorteile aus. So ist es zunächst weiterhin möglich, auf eine paßgenaue Bearbeitung der Ausnehmung des Griffkörpers und des Tragteiles zu verzichten, da es möglich ist, Passungsungenauigkeiten und Toleranzen durch das Federelement auszugleichen, welches in der Ausnehmung des Griffkörpers angeordnet ist und zumindest gegen zwei Seiten des Tragteiles sowie der Ausnehmung des Griffkörpers anliegt und somit dazu führt, daß das Tragteil gegen die Wandung der Ausnehmung des Griffkörpers gedrückt wird. Bei einem Vieleckguerschnitt ist somit sichergestellt, daß keine Relativbewegung zwischen dem Griffkörper und dem Gefäß auftreten kann. Eine Verriegelung des Griffkörpers mit dem Gefäß erfolgt formschlüssig.

Das Federelement ist nun aber auch einfach aufgebaut und kostengünstig herstellbar. Da es im wesentlichen eben und plattenförmig ausgebildet ist, ist es möglich, das Federelement als Blechbiegeteil herzustellen. Dies führt nicht nur zu einer kostengünstigen Produktionsmöglichkeit, vielmehr ist es auch möglich, das Federelement auf besonders einfache Weise exakt zu dimensionieren und den Anforderungen anzupassen.

Als besonders vorteilhaft erweist es sich, wenn das Tragteil und die Ausnehmung des Griffkörpers jeweils einen rechteckigen Querschnitt aufweisen. Bei dieser Ausgestaltungsform kann das Federelement in vorteilhafter Weise so ausgebildet sein, daß die Teilbereiche einen Winkel von 90° einschließen. Bei dieser Ausgestaltungsform ist es möglich, sowohl das Tragteil als auch die Ausnehmung des Griffkörpers auf besonders einfache Weise und kostengünstig herzustellen. Weiterhin erweist sich diese Ausgestaltung des Federelementes als besonders günstig, da zum einen dessen Herstellung vereinfacht wird und zum anderen sichergestellt ist, daß das Tragteil mit zwei im rechten Winkel zueinander angeordneten Flächen gegen die Ausnehmung des Griffkörpers anliegt.

Eine weitere vorteilhafte Weiterbildung des Federelementes ist dadurch gegeben, daß die Teilbereiche in sich gekrümmt ausgebildet sind, wobei bevorzugterweise die Krümmung in Form einer, mit Blick auf die dem Tragteil zugewandten Flächen, konvexen Krümmung ausgebildet ist. Durch diese Ausgestaltung wird sichergestellt, daß das Federelement eine ausreichende Kraft aufbringen kann, um das Tragteil mit mindestens zwei seiner Seitenflächen gegen die Fläche der Ausnehmung des Griffkörpers zu drücken.

In einer besonders günstigen Ausgestaltungsform weisen die Teilbereiche des Federelementes jeweils eine Länge auf, die etwa der Länge des Tragteiles entspricht. Da das Federelement fast über die gesamte Länge des Tragteiles eine Anpreßkraft gegenüber dem Griffkörper aufbringen kann, ist mit einer derartigen Ausgestaltung auf sichere Weise verhindert, daß der Griffkörper zu wackeln beginnt oder relativ zu dem Gefäß bewegbar ist, da das Tragteil über eine ausreichende Länge gegen den Griffkörper gedrückt wird.

Dadurch, daß zumindest einer der Teilbereiche einen seitlichen, etwa nasenartigen Vorsprung aufweist, der mit einer Haltenut des Griffkörpers in Eingriff bringbar ist, ist es möglich, das Federelement in sicherer Weise an dem Griffkörper zu lagern. Es ist somit möglich, das Federelement bei der Herstellung des Gefäßes dem Griffkörper zuzuordnen, so daß bei einem nachfolgenden Anbringen des Griffkörpers an dem Gefäß keine Vorkehrungen zur Handhabung des Federelementes getroffen werden müssen. Es wird somit verhindert, daß das Federelement abfallen oder verlorengehen kann.

Weil ein Teil eines Teilbereiches des Federelementes zum Tragteil hin abgewinkelt ist, beispielsweise in einem spitzen Winkel, und das Tragteil mit einer Ausnehmung zur Einführung des abgewinkelten Teiles versehen ist, wobei der freie Endbereich dieses abgewinkelten Teiles des Federelementes mit einer Innenfläche der Ausnehmung des Tragteiles in Anlage bringbar ist, ist es möglich, den Griffkörper mittels des Federelementes an dem Tragteil so zu versperren, daß ein ungewolltes Abrutschen oder Abziehen des Griffkörpers vermieden wird. Dabei erweist es sich insbesondere als vorteilhaft, wenn die Innenfläche der Ausnehmung des Tragteiles zur Längsachse des Tragteiles hin abgeschwächt ausgebildet ist. Bei dieser Ausgestaltungsform ist es insbesondere möglich, den Griffkörper spielfrei an dem Gefäß zu lagern, da bei einem Aufschieben des Griffkörpers der freie Endbereich des abgewinkelten Teiles an der Schräge entlanggleitet und jeweils eine feste Sperrwirkung aufbringt.

In günstiger Weise können die dem Gefäß zugewandten freien Endbereiche des Federelementes eine Einführabschrägung aufweisen, diese kann beispielsweise in Form einer abgewinkelten Nase ausgebildet sein, um das Aufschieben des Griffkörpers zu vereinfachen.

Weiterhin kann es günstig sein, wenn der freie Endbereich des Tragteiles in etwa paßgenau zur Ausnehmung des Griffkörpers ausgebildet ist, welche sich jedoch nur über einen geringen Betrag der Gesamtlänge des Tragteiles erstrecken muß. Es wird auf diese Weise sichergestellt, daß bei gewaltsamer Verdrehung des Griffes das Federelement nicht deformiert wird.

In günstiger Weise kann der dem Gefäß zugewandte Endbereich des Griffkörpers stirnseitig bündig abschließend von einer Hülse umgeben sein. Die Hülse kann zum einen eine zusätzliche Stützwirkung ausüben, zum anderen kann mittels der Hülse ein Ausbrechen des Endbereiches des Griffkörpers verhindert werden, was insbesondere dann vom Grundsatz her möglich ist, wenn der Griffkörper aus Kunststoff gefertigt ist; drittens kann diese Hülse die Haltenut abdecken, welche zur Ausformung der Federverrastung des Federelementes erforderlich ist.

Im folgenden wird die Erfindung anhand eines Ausführungsbeispieles in Verbindung mit der Zeichnung beschrieben. Dabei zeigen
- Fig. 1: eine Seitenansicht, teils im Schnitt, eines ersten Ausführungsbeispieles der Erfindung,
- Fig. 2: eine Schnittansicht entlang der Linie II-II von Fig. 1,
- Fig. 3: eine Seitenansicht auf ein Ausführungsbeispiel des erfindungsgemäßen Federelementes, wobei dieses gemäß der Darstellung in Fig. 1 angeordnet ist,
- Fig. 4: eine Draufsicht auf das Federelement von Fig. 3,
- Fig. 5: eine Schnittansicht ähnlich Fig. 2,
- Fig. 6: eine Seitenansicht eines weiteren Ausführungsbeispieles der Erfindung, ähnlich Fig. 1,
- Fig. 7: eine Schnittansicht entlang der Linie VII-VII von Fig. 6 und
- Fig. 8 und 9: eine weitere Ausführungsform des Tragteiles für die Befestigung des Griffes.

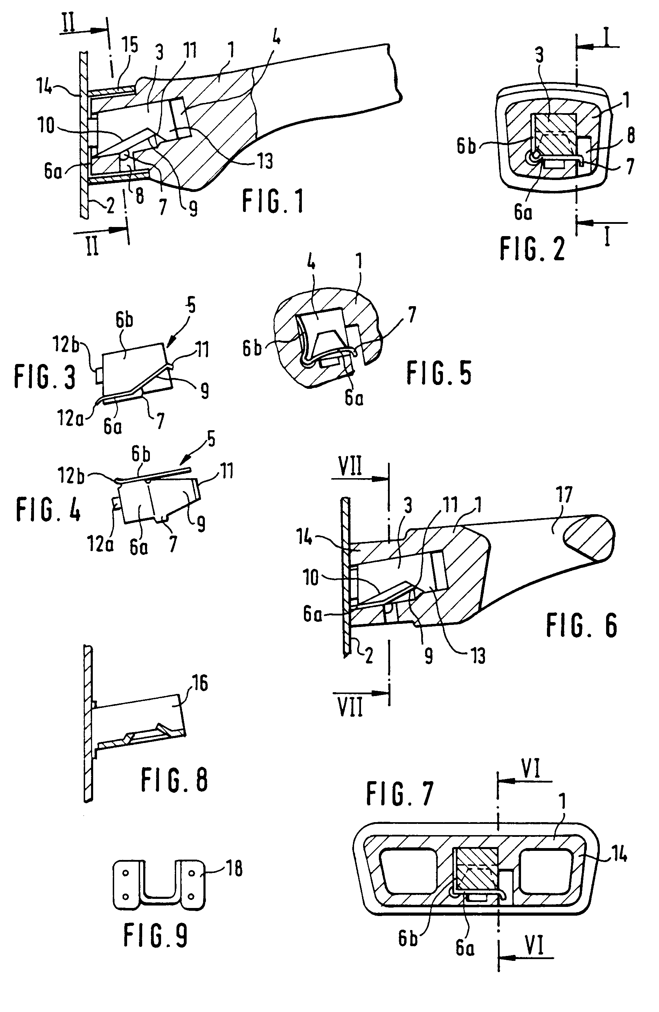

Die Fig. 1 und 2 zeigen Schnittansichten eines ersten Ausführungsbeispieles der Erfindung, wobei in Fig. 1 eine Seitenansicht, teils im Schnitt, entlang der Linie I-I von Fig. 2 dargestellt ist, während Fig. 2 eine Schnittansicht entlang der Linie II-II von Fig. 1 zeigt.

Bei dem in den Fig. 1 und 2 gezeigten Ausführungsbeispiel ist ein Griffkörper 1 in Form eines Stielgriffes, beispielsweise für eine Bratpfanne, ausgebildet. An einer Außenfläche 2 eines nicht weiter dargestellten Gefäßes ist ein Tragteil 3 befestigt, welches, wie in Fig. 2 gezeigt ist, im wesentlichen einen rechteckigen Querschnitt aufweist und welches in eine Ausnehmung 4 des Griffkörpers 1 einführbar ist. Das Tragteil kann auch stegförmig mit einem Querschnitt in Form eines "U" ausgebildet sein. Die Ausnehmung 4 weist ebenfalls einen quadratischen Querschnitt auf und ist so dimensioniert, daß der Griffkörper 1 auf das Tragteil 1 aufsteckbar ist. Die Ausnehmung 4 erstreckt sich im wesentlichen in der Längsachse des Griffkörpers 1, wobei diese Längsachse des Griffkörpers 1 in einem Winkel zu der Außenfläche 2 des Gefäßes angeordnet ist. Folglich ist es erforderlich, das Tragteil 3 ebenfalls in einem Winkel zu der Außenfläche 2 zu neigen. Die Befestigung des Tragteiles 3 erfolgt in üblicher Weise, beispielsweise durch einen Schweißvorgang.

In der Ausnehmung 4 ist ein Federelement 5 angeordnet, welches zwei einstückig miteinander verbundene, im wesentlichen ebene, plattenförmige Teilbereiche 6a und 6b umfaßt; sie sind im wesentlichen in einem Winkel von 90° zueinander ausgerichtet. Mittels des Federelementes 5 wird das Tragteil 3 gegen die Flächen der Ausnehmung 4 des Griffkörpers 1 gedrückt, so wie dies in Fig. 2 ersichtlich ist, wobei in dieser Darstellung die obere und die rechte Fläche des Tragteiles 3 direkt gegen den Griffkörper 1 in Anlage gebracht sind.

Das Tragteil 3 ist, wie insbesondere in Fig. 1 ersichtlich ist, mit einer Ausnehmung 10 versehen, wobei die Ausnehmung 10 in der Seitenansicht eine dreieckförmige Gestalt aufweist. Die dem Gefäß abgewandte Fläche der Ausnehmung 10 ist somit zur Längsachse des Griffkörpers 1 abgeschrägt, und zwar in Richtung auf die Außenfläche 2 des Gefäßes hin ansteigend. Mittels der Ausnehmung 10 ist es möglich, den Griffkörper 1, wie nachfolgend noch beschrieben werden wird, gegenüber dem Gefäß spielfrei zu verriegeln.

Die Fig. 3 und 4 zeigen eine Seitenansicht und eine Draufsicht des erfindungsgemäßen Federelementes 5, wobei die Lage des Federelementes 5 in Fig. 3 der in Fig. 1 gezeigten Lage entspricht. Wie bereits ausgeführt, weist das Federelement 5 zwei Teilbereiche 6a, 6b auf, welche im wesentlichen eben ausgebildet sind und zueinander einen Winkel von 90° aufweisen. Einer der Teilbereiche, nämlich der Teilbereich 6a, ist mit einem nasenartigen Vorsprung 7 versehen, welcher sowohl seitlich als auch von der Außenfläche des Teilbereiches 6a weg vorsteht. Weiterhin ist der Griffkörper 1 mit einer Haltenut 8 versehen (siehe Fig. 1 und 2), welche so dimensioniert und angeordnet ist, daß der Vorsprung 7 in diese Haltenut 8 einführbar ist. Wie sich aus der Darstellung der Fig. 1 und 2 ergibt, wird somit durch das Zusammenwirken des Vorsprungs 7 und der Haltenut 8 verhindert, daß das Federelement 5 in Längsrichtung der Achse des Griffkörpers 1 verschiebbar ist. Diese Halterung des Federelementes 5 mittels des Vorsprungs 7 und der Haltenut 8 erweist sich zum einen bei der Vormontage des Federelemente4s 5 an dem Griffkörper 1 als besonders nützlich, zum anderen wird, wie anschließend noch beschrieben werden wird, eine Sperrwirkung hervorgerufen, die ein Abziehen des Griffkörpers 1 von dem Tragteil 3 verhindert.

Das Federelement 5 ist weiterhin so ausgebildet, daß der Teilbereich 6a einen Teil 9 umfaßt, welcher einen freien Endbereich 11 aufweist und in einem spitzen Winkel zur Ebene des Teilbereiches 6a abgeschrägt ist. Die Abschrägungsrichtung des Teiles 9 ist so gewählt, daß dieses in die Ausnehmung 10 des Tragteiles 3 hineinragt. Der freie Endbereich 11 des Teiles 9 gelangt dabei in Anlage an die Innenfläche der Ausnehmung 10 des Tragteiles 3, wodurch der Griffkörper 1 gegenüber dem Tragteil 3 versperrt wird. Diese Sperrwirkung ist insbesondere besonders deutlich in Fig. 1 ersichtlich. Durch die sperrende Wirkung des freien Endbereiches 11 des Teiles 9 wird verhindert, daß der Griffkörper 1, nachdem er an dem Tragteil 3 angebracht wurde, von diesem wieder abgezogen werden kann. Um diese Sperrwirkung aufbringen zu können, ist es erforderlich, daß der Vorsprung 7 in der Haltenut 8 gegen den Griffkörper 1 anliegt. Das Federelement 5 dient bei dieser Ausgestaltungsform somit nicht nur dazu, ein Wackeln des Griffkörpers 1 zu verhindern, vielmehr wird der Griffkörper 1 auch spielfrei gegenüber dem Tragteil 3 verriegelt, wobei sich die spielfreie Verriegelungswirkung durch die Abschrägung der bereits beschriebenen Seitenflächen der Ausnehmung 10 ergibt.

An der der Außenfläche 2 des Gefäßes zugewandten Seite weist das Federelement 5 freie Endbereiche 12a, 12b der Teilbereiche 6a, 6b auf, welche nasenartig ausgebildet sind und zur Außenseite des jeweiligen Teilbereiches 6a, 6b hin abgeschrägt sind. Mittels dieser freien Endbereiche 12a, 12b ist es möglich, das Aufschieben des Griffkörpers 1 auf das Tragteil 3 zu erleichtern. Ein Verklemmen des Federelementes 5 während dieses Aufschiebevorganges wird somit verhindert.

Damit das Federelement 5 eine Federkraft aufbringen kann, durch welche der Griffkörper 1 gegenüber dem Tragteil 3 in Querrichtung vorgespannt wird, ist es erforderlich, das Federelement 5 geringfügig zu verformen. Dies kann dadurch erfolgen, daß die Teilbereiche 6a, 6b des Federelementes 5 konvex ausgebildet sind, so wie dies in Fig. 5 in vereinfachter Weise dargestellt ist. Bei dieser Darstellung ist das Federelement 5 in die Ausnehmung 4 des Griffkörpers 1 eingesetzt. Bei einem Aufschieben des Griffkörpers 1 auf das Tragteil 3 erfolgt eine elastische Verformung des Federelementes 5, wodurch dieses die in Fig. 2 vereinfacht dargestellte Form aufweist.

Die Fig. 6 und 7 zeigen ein weiteres Ausführungsbeispiel der Erfindung, wobei sich dieses von dem in den Fig. 1 bis 4 gezeigten Ausführungsbeispiel nur in der Form des Griffkörpers 1 unterscheidet. Der Griffkörper 1 ist bei dem Ausführungsbeispiel der Fig. 6 und 7 mit einer Durchgriffsausnehmung 17 versehen, er bildet somit beispielsweise den Griff eines Kochtopfes. Im übrigen wurden gleiche Teile mit gleichen Bezugsziffern versehen. Auf eine nochmalige detaillierte Beschreibung dieser Teile kann deshalb an dieser Stelle verzichtet werden.

Bei den gezeigten Ausführungsbeispielen ist es möglich, einen freien Endbereich 13 des Tragteiles 3, d.h. das äußerste Ende des Tragteiles 3, so zu dimensionieren, daß dieses in etwa paßgenau in die Ausnehmung 4 einführbar ist. Durch diese Zuordnung, welche nur über eine sehr geringe Längenerstreckung des Tragteiles 3 vorliegen muß, läßt sich bei gewaltsamer Verdrehung des Griffes eine ungewollte Belastung oder Deformierung der Teilbereiche 6a und 6b verhindern. Weiterhin ist es, wie in Fig. 1 dargestellt, möglich, an einem Endbereich 14 des Griffkörpers 1, welcher der Außenfläche 2 des Gefäßes zugewandt ist, eine Hülse 15 vorzusehen, welche den Endbereich 14 umgibt. Die Hülse 15 kann so bemessen sein, daß sich der Griffkörper 1 bei einer Kraftbeaufschlagung gegen die Hülse 15 abstützt, wodurch eine sichere Kraftübertragung gewährleistet ist und wodurch verhindert wird, daß der Endbereich 14 des Griffkörpers 1 ausbrechen kann, falls übermäßige Belastungen aufgebracht werden. Die Hülse 15 kann entweder bündig mit dem Endbereich 14 abschließen, es ist jedoch auch möglich, diese, wie in Fig. 1 dargestellt, etwas länger auszubilden, so daß die stirnseitige Fläche des Endbereiches 14 des Griffkörpers 1 nicht direkt gegen die Außenfläche 2 des Gefäßes anliegt. Dies kann sich beispielsweise hinsichtlich der Wärmeisolierung günstig auswirken.

Das Tragteil 3 gemäß den Fig. 1 bis 7 ist als Haltebolzen mit einem massiven Querschnitt ausgebildet. Es ist jedoch auch denkbar, ohne daß die Tragfunktion des Tragteiles beeinträchtigt wird, dieses aus einem U-förmig verformten Blech 16 herzustellen, das zwei abgewinkelte Laschen 18 aufweist, mit denen das Tragteil am Gefäß befestigbar ist (Fig. 8 und 9). Das Tragteil hat auch eine dem Tragteil 3 entsprechende Ausnehmung für den Eingriff des abgewinkelten Teiles 9 des Federelementes 5.

Die Erfindung ist nicht auf die beschriebenen Ausführungsbeispiele beschränkt. Vielmehr ist es im Rahmen der Erfindung möglich, insbesondere die Ausgestaltung des Federelementes 5 sowie die Dimensionierung und Ausgestaltung des Querschnittes des Tragteiles 3 und der Ausnehmung 4 des Griffkörpers 1 den jeweiligen Erfordernissen anzupassen.

## Patentansprüche

1. Gefäß mit einem mit diesem verbindbaren Griffkörper (1), mit einem an einer Außenfläche des Gefäßes befestigten, einen Vieleckquerschnitt aufweisenden Tragteil (3), mit einer in dem Griffkörper (1) an dessen Stirnseite befindlichen, in ihrem Querschnitt zu dem Querschnitt des Tragteiles (3) passenden Ausnehmung (4) und mit einem im Bereich der Ausnehmung (4) angeordneten, mit dem Tragteil (3) und dem Griffkörper (1) in Eingriff bringbaren Federelement (5), wobei der Griffkörper (1) formschlüssig mit dem Tragteil (3) verriegelbar ist in der Weise, daß das Federelement (5) einen Vorsprung (7) aufweist, der mit einer Haltenut (8) des Griffkörpers (1) in Eingriff bringbar ist, dadurch gekennzeichnet, daß das Federelement (5) zwei im wesentlichen ebene, plattenförmige, einstückig miteinander verbundene Teilbereiche (6a, 6b) aufweist, welche in einem Winkel Zueinander angeordnet sind und welche an zwei Seitenflächen des Tragteiles (3) und den zugeordneten Flächen der Ausnehmung (4) anliegen, daß ein Teil (9) eines Teilbereiches (6a) des Federelementes (5), der auch den Vorsprung (7) für eine formschlüssige Verriegelung des Griffkörpers (1) aufweist, zu dem Tragteil (3) hin abgewinkelt ist, daß das Tragteil (3) mit einer Ausnehmung (10) zur Einführung des abgewinkelten Teiles (9) versehen ist und daß ein freier Endbereich (11) des Teilbereiches (6a) mit einer Innenfläche der Ausnehmung (10) in Anlage bringbar ist.

2. Gefäß nach Anspruch 1, dadurch gekennzeichnet, daß das Tragteil (3) und die Ausnehmung (4) des Griffkörpers (1) jeweils einen rechteckigen Querschnitt aufweisen.

3. Gefäß nach Anspruch 2, dadurch gekennzeichnet, daß die Teilbereiche (6a, 6b) des Federelementes (5) einen Winkel von ca. 90° einschließen.

4. Gefäß nach einem der Ansprüche 1 bis 3, dadurch gekennzeichnet, daß die Teilbereiche (6a, 6b) des Federelementes (5) jeweils eine Länge aufweisen, die etwas kürzer als die Länge des Tragteiles (3) ist.

5. Gefäß nach Anspruch 1, dadurch gekennzeichnet, daß die Innenfläche der Ausnehmung (10) zur Längsachse des Tragteiles (3) hin abgeschrägt ausgebildet ist.

6. Gefäß nach einem der Ansprüche 1 bis 5, dadurch gekennzeichnet, daß dem Gefäß zugewandte freie Endbereiche (12a, 12b) des Federelementes (5) eine Einführabschrägung aufweisen.

7. Gefäß nach einem der Ansprüche 1 bis 6, dadurch gekennzeichnet, daß der freie Endbereich (13) des Tragteiles (3) paßgenau zur Ausnehmung (4) des Griffkörpers (1) ausgebildet ist.

8. Gefäß nach einem der Ansprüche 1 bis 7, dadurch gekennzeichnet, daß der Endbereich (14) des Griffkörpers (1) stirnseitig bündig abschließend von einer Hülse (15) umgeben ist.

9. Gefäß nach einem der Ansprüche 1 bis 8, dadurch gekennzeichnet, daß die Teilbereiche (6a, 6b) des Federelementes (5) in sich gekrümmt ausgebildet sind.

10. Gefäß nach Anspruch 9, dadurch gekennzeichnet, daß die Krümmung in Form einer mit Blick auf die dem Tragteil (3) zugewandten Flächen konvexen Krümmung ausgebildet ist.

11. Gefäß nach Anspruch 1 bis 10, dadurch gekennzeichnet, daß das Tragteil (3) als Haltebolzen ausgebildet ist.

## Claims

1. A vessel with a handle body (1) connectible thereto, with a bearing part (3) which is secured to an outer surface of the vessel and has a polygonal cross-section, with a recess (4) which is located in the front end of the handle body (1) and whose cross-section matches that of the bearing part (3), and with a spring element (5) which is arranged in the region of the recess (4) and can be brought into engagement with the bearing part (3) and the handle body (1), the handle body (1) being positively lockable with the bearing part (3) by the spring element (5) having a projection (7) which can be brought into engagement with a retaining slot (8) in the handle body (1), characterized in that the spring element (5) has two portions (6a, 6b) which are substantially plane, plate-shaped and connected to each other to form one piece arranged at an angle to one another and resting against two lateral surfaces of the bearing part (3) and against the associated surfaces of the recess (4), in that one part (9) of a portion (6a) of the spring element (5), which part (9) also has the projection (7) for positive locking of the handle body (1), is bent towards the bearing part (3), in that the bearing part (3) is provided with a recess (10) for the introduction of the bent part (9), and in that a free end-region (11) of the portion (6a) can be brought into contact with an inner surface of the recess (10).

2. A vessel in accordance with Claim 1, characterized in that the bearing part (3) and the recess (4) in the handle body (1) each have a rectangular cross-section.

3. A vessel in accordance with Claim 2, characterized in that the portions (6a, 6b) of the spring element (5) form an angle of approximately 90°.

4. A vessel in accordance with any one of Claims 1 to 3, characterized in that the portions (6a, 6b) of the spring element (5) are each somewhat shorter in length than the bearing part (3).

5. A vessel in accordance with Claim 1, characterized in that the inner surface of the recess (10) is constructed so as to slope towards the longitudinal axis of the bearing part (3).

6. A vessel in accordance with any one of Claims 1 to 5, characterized in that free end-regions (12a, 12b) of the spring element (5) which are turned towards the vessel have an insertion slope.

7. A vessel in accordance with any one of Claims 1 to 6, characterized in that the free end-region (13) of the bearing part (3) is constructed to fit exactly into the recess (4) in the handle body (1).

8. A vessel in accordance with any one of Claims 1 to 7, characterized in that the end region (14) of the handle body (1) is surrounded by a sleeve (15) ending flush with the front end.

9. A vessel in accordance with any one of Claims 1 to 8, characterized in that the portions (6a, 6b) of the spring element (5) are inherently curved.

10. A vessel in accordance with Claim 9, characterized in that the curvature is such that it is convex when the surfaces facing the bearing part (3) are viewed.

11. A vessel in accordance with Claim 1 to 10, characterized in that the bearing part (3) is constructed as a fixing bolt.

## Revendications

1. Récipient comportant une poignée (1), qui peut lui être raccordée, une pièce de support (3) fixée à une surface extérieure du récipient et possédant une section transversale polygonale, un évidement (4) situé dans la face frontale de la poignée (1) et dont la section transversale est adaptée à la section transversale de la partie de support (3), et un élément élastique (5) situé dans la zone de l'évidement (4) et pouvant être amené en prise avec la pièce de support (3) et la poignée (1), la poignée (1) pouvant être verrouillée selon une liaison par complémentarité de formes à la partie de support (3) grâce au fait que l'élément élastique (5) possède un appendice saillant (7) qui peut être engagé dans une rainure de retenue (8) de la poignée (1),
caractérisé en ce que l'élément élastique (5) comporte deux parties en forme de plaques sensiblement planes (6a,6b) réunies d'un seul tenant, qui font un angle entre elles et s'appliquent sur deux surfaces latérales de la pièce de support (3) et sur les surfaces associées de l'évidement (4),
en ce qu'un élément (9) d'une pièce (6a) de l'élément élastique (5), qui comporte également l'appendice saillant (7) destiné au verrouillage par complémentarité de formes de la poignée (1), est coudé en direction de la pièce de support (3),
en ce que la partie de support (3) comporte un évidement (10) permettant l'introduction de l'élément coudé (9),
et en ce qu'une zone terminale libre (11) de la partie (6a) peut s'appliquer contre une surface intérieure de l'évidement (10).

2. Récipient selon la revendication 1, caractérisé en ce que la pièce de support (3) et l'évidement (4) de la poignée (11) présentent chacun une section transversale rectangulaire.

3. Récipient selon la revendication 2, caractérisé en ce que les parties (6a,6b) de l'élément élastique (5) font entre elles un angle d'environ 90°.

4. Récipient selon l'une des revendications 1 à 3, caractérisé en ce que les parties (6a,6b) de l'élément élastique (5) ont respectivement une longueur légèrement inférieure à la longueur de la pièce de support (3).

5. Récipient selon la revendication 1, caractérisé en ce que la surface intérieure de l'évidement (10) est biseautée en direction de l'axe longitudinal de la pièce de support (3).

6. Récipient selon l'une des revendications 1 à 5, caractérisé en ce que des zones terminales libres (12a,12b) de l'élément élastique (5), tournées vers le récipient, présentent un biseau d'introduction.

7. Récipient selon l'une des revendications 1 à 6, caractérisé en ce que la zone terminale libre (13) de la pièce de support (3) est agencée d'une manière adaptée de façon précise à l'évidement (4) de la poignée (1).

8. Récipient selon l'une des revendications 1 à 7, caractérisé en ce que la partie terminale (14) de la poignée (1) est entourée frontalement par une douille (15), qui se termine de niveau avec ladite zone.

9. Récipient selon l'une des revendications 1 à 8, caractérisé en ce que les éléments (6a,6b) de l'élément élastique (5) sont en soi recourbés.

10. Récipient selon la revendication 9, caractérisé en ce que la courbure est convexe en direction des surfaces tournées vers la pièce de support (3).

11. Récipient selon l'une des revendication 1 à 10, caractérisé en ce que la pièce de support est constituée comme une tige de maintien.
